# EUROPEAN PATENT APPLICATION

(11) **EP 4 273 379 A1**
(43) Date of publication of application: **08.11.2023**
(21) Application number: 23171608.5
(22) Date of filing: 04.05.2023
(51) Int. Cl.: F02C 3/10, F01D 15/10, F02C 3/22

(54) **HYDROGEN ENERGY CONVERSION SYSTEM**

(30) Priority: 04.05.2022 US 202217736607
(71) Applicant: Hamilton Sundstrand Corporation, Charlotte, NC 28217-4578 (US)
(72) Inventor: VEILLEUX Jr., Leo J., Wethersfield, 06109 (US); RIBAROV, Lubomir A., West Hartford, 06107 (US)
(74) Representative: Dehns

(57) **Abstract**

The present disclosure provides hydrogen energy conversion systems, assemblies and methods. More particularly, the present disclosure provides clean energy hydrogen-powered turbine and emergency hybrid power unit, EHPU, systems, assemblies and methods (e.g., for aircraft or the like). The present disclosure provides for a hydrogen based gas turbine coupled with a hydrogen fuel cell architecture. Both the turbine and the fuel cell, FC, can increase or decrease output. Energy storage batteries or ultra-capacitors can store amounts of emergency peak demand and/or emergency energy. This approach coupled with distributed redundant propulsors creates a safe and highly redundant clean aircraft. The fuel cell can act as emergency power and reduce turbine sizing. The batteries provide peak load capacity and additional emergency power. The fuel cell and gas turbine can keep the battery and/or the supercapacitor fully charged until required.

## Description

### TECHNICAL FIELD

The present disclosure relates to hydrogen energy conversion systems, assemblies and methods and, more particularly, to clean energy hydrogen-powered turbine and emergency hybrid power unit (EHPU) systems, assemblies and methods (e.g., for aircraft or the like).

### BACKGROUND

In general, modern electric aircraft/engine (MEA/MEE) hybrid architectures may utilize integrated turbine-driven electric generators for providing electric power for electric load/demand. Some aircraft based electric power generation systems are generally known. For example, the integration of a gas turbine with an electric motor has been proposed.

It is noted that the demand for on-board generated electric power continues to increase (e.g., for aircraft or the like).

### BRIEF DESCRIPTION

The present disclosure provides embodiments that may result in improved clean energy hydrogen-powered turbine and emergency hybrid power unit (EHPU) systems, assemblies and methods.

The present disclosure provides for a hydrogen energy conversion system including an electric motor coupled to an air compressor and a compressor turbine via a drive shaft; a power turbine coupled to an electric generator; and a combustor; wherein liquefied compressed hydrogen is configured to flow through at least one of: (i) a casing of the electric motor, (ii) a housing of the electric generator, or (iii) a heat exchanger, to change the phase of the liquefied compressed hydrogen to gaseous hydrogen fuel, with a first portion of the gaseous hydrogen fuel flowing to the combustor; wherein the combustor utilizes the first portion of the gaseous hydrogen fuel along with compressed air from the air compressor to generate hot combustion products that are sent to the compressor turbine, with the compressor turbine generating hot exhaust that flows to the power turbine to provide output power to the electric generator; and wherein a second portion of the gaseous hydrogen fuel flows to an anode side of a fuel cell as fuel for the fuel cell.

In addition to one or more of the features described, or as an alternative to any of the foregoing embodiments, the fuel cell is a unitized regenerative fuel cell.

In addition to one or more of the features described, or as an alternative to any of the foregoing embodiments, the power turbine is a variable-speed single-shaft power turbine that is connected rigidly via a shaft to the electric generator.

In addition to one or more of the features described, or as an alternative to any of the foregoing embodiments, the power turbine extracts power from expanded exhaust gases downstream of the compressor turbine.

In addition to one or more of the features described, or as an alternative to any of the foregoing embodiments, the electric motor is an inverter-fed electric motor and a portion of main electric generator power is absorbed by a power converter.

In addition to one or more of the features described, or as an alternative to any of the foregoing embodiments, the power converter is an AC-AC solid state power converter that controls the electric motor speed.

In addition to one or more of the features described, or as an alternative to any of the foregoing embodiments, wherein by assisting the air compressor with the electric motor, the system is able to increase the power output of the compressor turbine, which in turn increases the power output of the power turbine, resulting in increased output power provided to the electric generator.

In addition to one or more of the features described, or as an alternative to any of the foregoing embodiments, a portion of electric power generated by the electric generator is stored in at least one battery.

In addition to one or more of the features described, or as an alternative to any of the foregoing embodiments, the output of the electric generator is configured to power distributed electric propulsion thrusters of an aircraft.

In addition to one or more of the features described, or as an alternative to any of the foregoing embodiments, the liquefied compressed hydrogen is stored on-board an aircraft in at least one tank.

In addition to one or more of the features described, or as an alternative to any of the foregoing embodiments, compressed air bled off the air compressor flows to a cathode side of the fuel cell as an oxidizer of the fuel cell.

In addition to one or more of the features described, or as an alternative to any of the foregoing embodiments, a pressure regulator valve controls the air bleed flow to the cathode side of the fuel cell.

In addition to one or more of the features described, or as an alternative to any of the foregoing embodiments, electric power generated from the fuel cell is used by electric loads on-board an aircraft or stored in dedicated fuel cell batteries.

In addition to one or more of the features described, or as an alternative to any of the foregoing embodiments, the compressed air bled off the air compressor is heated in a heat exchanger, with the compressed air absorbing heat from hot exhaust off the power turbine.

In addition to one or more of the features described, or as an alternative to any of the foregoing embodiments, discharge effluent liquid water from the cathode side is delivered at an inlet of the air compressor to cool inlet air to the air compressor.

In addition to one or more of the features described, or as an alternative to any of the foregoing embodiments, waste heat from the fuel cell is used for de-icing or anti-icing of an aircraft.

In addition to one or more of the features described, or as an alternative to any of the foregoing embodiments, electric power from the fuel cell is configured to be fed to the electric motor to provide additional rotational torque to the air compressor to assist with an in-flight re-start of a failed gas turbine engine.

The present disclosure provides for a hydrogen energy conversion method including coupling an electric motor to an air compressor and a compressor turbine via a drive shaft; coupling a power turbine to an electric generator; flowing liquefied compressed hydrogen through at least one of (i) a casing of the electric motor, (ii) a housing of the electric generator, or (iii) a heat exchanger, to change the phase of the liquefied compressed hydrogen to gaseous hydrogen fuel; flowing a first portion of the gaseous hydrogen fuel to a combustor; wherein the combustor utilizes the first portion of the gaseous hydrogen fuel along with compressed air to generate hot combustion products that are sent to the compressor turbine, with the compressor turbine generating hot exhaust that flows to the power turbine to provide output power to the electric generator; and flowing a second portion of the gaseous hydrogen fuel to an anode side of a fuel cell as fuel for the fuel cell.

In addition to one or more of the features described, or as an alternative to any of the foregoing embodiments, compressed air bled off the air compressor flows to a cathode side of the fuel cell as an oxidizer of the fuel cell; and wherein electric power generated from the fuel cell is used by electric loads on-board an aircraft or stored in dedicated fuel cell batteries.

In addition to one or more of the features described, or as an alternative to any of the foregoing embodiments, electric power from the fuel cell is configured to be fed to the electric motor to provide additional rotational torque to the air compressor to assist with an in-flight re-start of a failed gas turbine engine.

The above described and other features are exemplified by the following figures and detailed description.

Any combination or permutation of embodiments is envisioned. Additional features, functions and applications of the disclosed systems, assemblies and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed systems, assemblies and methods, reference is made to the appended figures, wherein:
FIG. 1 is a schematic of an example hydrogen energy conversion system, according to the present disclosure;
FIG. 2 is a schematic of an example fuel cell operating in an electric power generation mode, according to the present disclosure; and
FIG. 3 is a schematic of an example fuel cell operating in a regenerative mode, according to the present disclosure.

### DETAILED DESCRIPTION

The example embodiments disclosed herein are illustrative of hydrogen energy conversion systems, and assemblies of the present disclosure and methods/techniques thereof. It should be understood, however, that the disclosed embodiments are merely examples of the present disclosure, which may be embodied in various forms. Therefore, details disclosed herein with reference to example hydrogen energy conversion systems and associated processes/techniques of fabrication/assembly and use are not to be interpreted as limiting, but merely as the basis for teaching one skilled in the art how to make and use the systems/assemblies and/or alternative systems/assemblies of the present disclosure.

The present disclosure provides hydrogen energy conversion systems, assemblies and methods. More particularly, the present disclosure provides clean energy hydrogen-powered turbine and emergency hybrid power unit (EHPU) systems, assemblies and methods (e.g., for aircraft or the like).

Current practice provides that as the demand for on-board generated electric power continues to increase, more electric-generating equipment and its resulting cooling can be needed. At the same time, space and weight should be minimized, while maintaining operational safety and redundancy for successful aircraft applications. The present disclosure provides embodiments that can address these technological challenges.

It is noted that clean energy and/or sustainable energy may be changing the acceptable means of flight propulsors. Jet fuel and hydrocarbons may no longer be the dominant means of providing energy in the future. New architectures may be required which eliminate or reduce the use of hydrocarbons.

The present disclosure provides that due to its high energy density and clean-burning capabilities, hydrogen (H₂) can be considered for MEA/MEE/hybrid electric propulsion applications. In addition to its use as a fuel, compressed liquefied H₂ can also be used as a coolant to various on-board waste heat loads.

The present disclosure provides for a hydrogen based gas turbine coupled with a hydrogen fuel cell architecture. Both the turbine and the fuel cell (FC) can increase or decrease output. Energy storage batteries or ultra-capacitors can store amounts of emergency peak demand and/or emergency energy. This approach coupled with distributed redundant propulsors creates a safe and highly redundant clean aircraft. The fuel cell can act as emergency power and reduce turbine sizing. The batteries provide peak load capacity and additional emergency power. The fuel cell and gas turbine can keep the battery and/or the supercapacitor fully charged until required.

In example embodiments, the present disclosure provides an integrated hydrogen turbine-driven electric generator with an inverter-fed electric motor and a fuel cell (FC) into an emergency hybrid power unit (EHPU). This EHPU can be powered by hydrogen stored on-board the aircraft. The EHPU provides electric power (through the electric generator and the FC) during normal operations. The hydrogen turbine generator can provide electric energy to distributed propulsors. In case of an engine failure, the FC can continue to provide electric power for the on-board electric power needs of the aircraft, such as, for example, flight control or distributed electric propulsion in concert with a battery. Additionally, the FC can provide electric power to the electric motor for augmented torque to re-start a failed gas turbine engine.

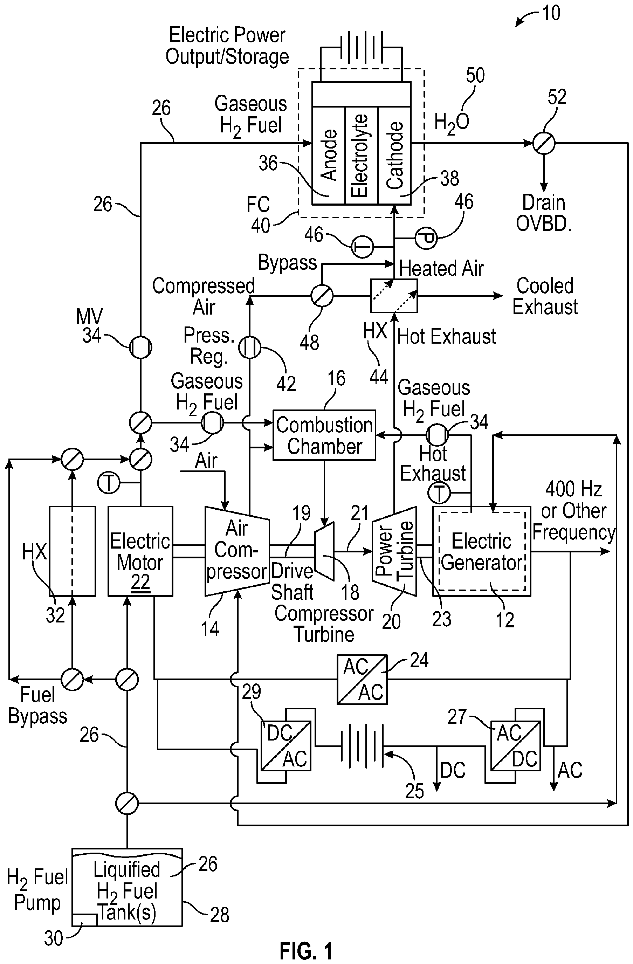

FIG. 1 is a schematic of a hydrogen energy conversion system 10, according to certain embodiments of the present disclosure. In example embodiments, system 10 takes the form of a clean energy hydrogen-powered turbine and emergency hybrid power unit (EHPU) system 10.

As shown in FIG. 1, for the turbine-drive electric generator 12, air is compressed by the air compressor 14. The compressed air is mixed with fuel (e.g., gaseous H₂ fuel) in the combustor 16 (e.g., combustion chamber 16), the mixture ignited and burned, while the resulting hot combustion products are sent to the compressor turbine 18. This compressor turbine 18 is connected on the same drive shaft 19 as the air compressor 14. Due to this compact/lightweight design, very high operational rotational speeds can be obtained. This can improve operational efficiency while keeping the overall weight/size to a minimum. The hot exhaust 21 of the compressor turbine 18 flows to the power turbine 20 next.

In one embodiment, the power turbine 20 is a variable-speed single-shaft turbine that is connected by a shaft 23 to an electric generator 12. The power turbine 20 extracts the power from the expanded exhaust gases downstream of the compressor turbine 18.

The shaft 23 of the power turbine 20 is connected to the electric generator 12 which can be a standard wound-field synchronous generator 12, or other generator types, e.g., induction, permanent magnet or switched-reluctance generators 12. The compressor drive shaft 19 is coupled mechanically to an inverter-fed electric motor 22 and a portion of main electric generator power is absorbed by a power converter 24. In one embodiment, the power converter 24 is and AC to AC power converter. It can be a solid state AC-AC converter in one embodiment.

The power converter 24 controls the electric motor 22 speed. The power converter 24 can be a VF-CF (Variable Frequency-Constant Frequency) power converter. Alternatively, the AC-AC solid state power converter 24 can be any other suitable architecture.

By assisting the air compressor 14 with the electric motor 22, the hybrid-electric system 10 is able to increase the power output of the compressor turbine 18 when necessary. This, in turn increases the power output of the power turbine 20. As a result, more output power is provided to the electric generator 12.

Any additional electric power generated by the electric generator 12 which is not immediately needed/consumed can be stored in at least one battery 25 (e.g., at least one on-board battery 25 of the aircraft). From generator 12 and prior to the at least one battery 25, system 10 can include an adapter 27 (e.g., an AC-DC adapter 27), with an offtake for AC prior to the adapter 27, and an offtake for DC after adapter 27. The system 10 can include an inverter 29 (e.g., DC-AC inverter 29) after the battery 25 to drive the electric motor 22. The output of the generator 12 can power aircraft needs as well as distributed electric propulsion thrusters.

In certain embodiments, the system 10 of the present disclosure utilizes liquefied compressed hydrogen (H₂) as a fuel 26 (e.g., which is stored on-board in one or more tanks 28 as the fuel 26 and the coolant for advanced modern hydrogen-propelled aircraft). The liquefied H₂ fuel 26 can flow (e.g., via H₂ fuel pump 30) directly through the casing of the electric motor 22 and/or the housing of the electric generator 12, and/or through one or more dedicated heat exchangers 32 to cool the various electric heat loads. While absorbing this waste heat, the liquid H₂ fuel 26 raises its temperature thus changing its phase from liquid to vapor prior to flowing as gaseous H₂ fuel 26 to the combustor 16 of the vehicle (e.g., for propulsion).

In this way, the energy (e.g., waste heat from the hot operating electric motor 22 and/or the electric generator 12) is transferred to the combustor 16 (while changing the phase of the H₂ fuel 26). The work of compressing/storing the H₂ fuel in cryogenic vessels can already be performed on the ground prior to transporting the compressed liquefied H₂ fuel 26 to the aircraft (e.g., to one or more tanks 28 on-board the aircraft).

The heated gaseous H₂ fuel 26 can also flow (e.g., through a metering valve (MV) 34) to the anode side 36 of a fuel cell 40, acting as its fuel. The fuel cell 40 can be for example and without limitation, an alkaline fuel cell (AFC) 40, phosphoric acid fuel cell (PAFC) 40, proton exchange membrane fuel cell (PEMFC) 40, molten carbonate fuel cell (MCFC) 40, direct alcohol fuel cell (DAFC) 40, methanol fuel cell (MFC) 40, or solid oxide fuel cell (SFC) 40, etc.

Compressed air bled off the compressor 14 flows to the cathode side 38 of the fuel cell 40, acting as the oxidizer of the fuel cell 40. A pressure regulator valve 42 can control the air bleed flow to the cathode side 38 of the fuel cell 40. The electric power generated from the fuel cell 40 can be used by various on-board electric loads (e.g., lighting, galleys, lavatories, etc.) and/or stored in dedicated fuel cell batteries.

The performance of the fuel cell 40 and the overall thermodynamic efficiency of the emergency hybrid power unit (EHPU) system 10 can be improved by heating the compressed air in a compact heat exchanger 44 where the compressed air absorbs heat from the hot exhaust off the power turbine 20. Temperature and/or pressure sensors 46 can monitor the proper air flow parameters to optimize the performance of the fuel cell 40. A three-way valve 48 can allow some of the compressed air to bypass the heat exchanger 44 (if needed) on its way to the cathode 38 of the fuel cell 40.

The discharge effluent liquid water (H₂O) 50 from the cathode 38 can be sprayed at the inlet of the compressor 14 to cool the inlet air thus increasing the air's density, hence the air mass flow, thus increasing the overall thrust of the engine (as needed). Alternatively, the liquid H₂O 50 can be discharged overboard. A three-way valve 52 can modulate between these two flows as needed.

Waste heat from the fuel cell 40 can be used for de-icing/anti-icing (as needed), or it can be discharged overboard.

With respect to safety and redundancy, and in case of a gas turbine engine failure (in-flight shut-down or IFSD), the fuel cell 40 can still continue to operate and produce electric power.

Electric power from the fuel cell 40 can be fed to the electric motor 22 to provide additional rotational torque to the compressor 14 thus assisting with the in-flight re-start of a failed gas turbine engine. Thus, unlike present conventional emergency units, the fuel cell 40 can provide essential power during an emergency (e.g., gas turbine in-flight shut-down or GT IFSD), and it can also supply electric power continuously throughout the normal flight mission.

There are many benefits of the systems, assemblies and methods of the present disclosure, including, without limitation: fully optimized and integrated EHPU system 10 with increased overall thermal efficiency and reliability and safety/redundancy; cold liquefied H₂ fuel 26 can be pre-heated/vaporized by absorbing waste electric heat directly (through electric motor 22 case and/or electric generator 12 housing) or indirectly (in the heat exchanger(s) 32); use air bleed (from air compressor 14) as the oxidizer to feed the cathode side 38 of the fuel cell 40; use heated gaseous H₂ as the fuel 26 to feed the anode side 36 of the fuel cell 40; use heated gaseous H₂ as the fuel 26 for the hybrid integrated turbine-driven electric generator 12 with an inverter-fed electric motor 22; generation of electric power by both the fuel cell 40 and the hybrid integrated turbine-driven electric generator 12; improved safety/redundancy in case of gas turbine engine failure (fuel cell 40 can still continue to operate and produce electric power); fuel cell 40 can supply electric power to electric motor 22 to provide additional starting torque to compressor 14 thus facilitating effective gas turbine engine re-start (post-IFSD) at high altitudes (low ambient air temperature/pressure); EHPU system 10 may replace conventional on-board ram-air turbine or RAT; consistent with modern MEA/MEE/hybrid-electric aircraft propulsion systems; and/or supports new CLEEN technology initiative applications.

It is noted that systems, assemblies and methods of the present disclosure can be used for the optimization of advanced H₂ fuel-based propulsion systems with added benefits of increased on-board electric power generation (by both the fuel cell 40 and the hybrid integrated turbine-driven electric generator 12) for various commercial and/or military engine programs.

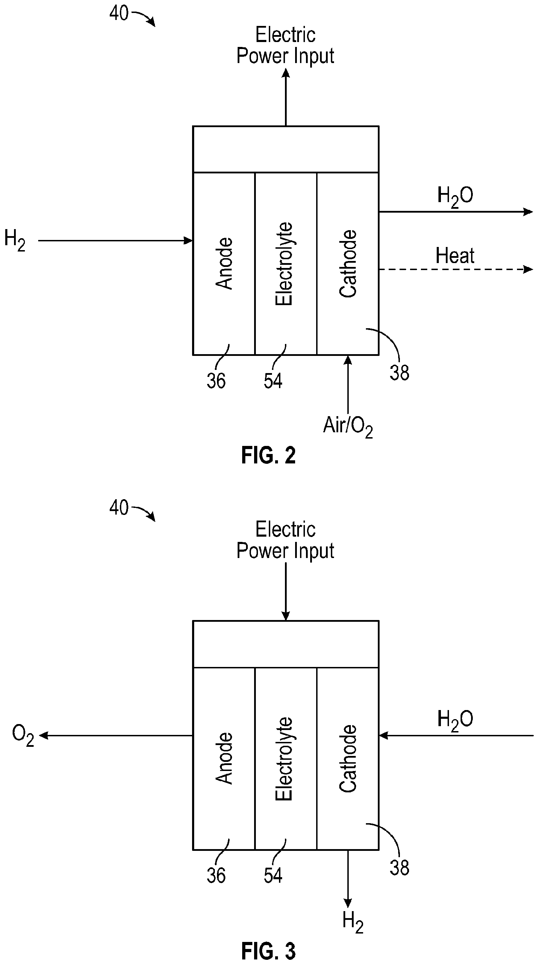

FIG. 2 is a schematic of an example fuel cell 40 operating in an electric power generation mode.

As shown in FIG. 2, the fuel 26 (hydrogen) and oxidizer (air/oxygen) are fed to the anode 36 and cathode 38, respectively.

At the anode 36 the hydrogen gas 26 is electrochemically disassociated (in the presence of a catalyst) into hydrogen ions (H⁺) and free electrons (e'). The anode reaction is:

2H₂ → 4H⁺ + 4e⁻

The electrons flow out of the anode 36 through an external electrical circuit.

The hydrogen ions flow into the electrolyte layer 54 and eventually to the cathode 38, driven by both concentration and potential forces.

At the cathode 38, the oxygen (O₂) gas is electrochemically combined (in the presence of a catalyst) with the hydrogen ions (H⁺) and free electrons (e⁻) to generate water (H₂O). The cathode reaction is:

O₂ + 4H⁺ + 4e⁻ → 2H₂O

The overall (net fuel cell) reaction in a fuel cell 40 is:

2H₂ + O₂ → 2H₂O (vapor) + Energy

FIG. 3 is a schematic of an example fuel cell 40 operating in a regenerative mode (H₂ generation).

As shown in FIG. 3, when an external voltage is applied in a regenerative fuel cell 40, water at the cathode side 38 undergoes electrolysis thus forming hydrogen (H₂) and oxide ions (O²⁻). These oxide ions are then transported through the electrolyte 54 to the anode 36 where they can be oxidized to form oxygen (O₂). In this reverse (regenerative) mode, the polarity of the fuel cell 40 is opposite to that for the electric power generation fuel cell 40 mode.

The following reactions describe the chemical process in the regenerative mode (H₂ generation).

The anode 36 reaction is:

O²⁻ → ½ O₂ + 2e⁻

The cathode reaction is:

H₂O + 2e⁻ → H₂ + O²⁻

The overall (net fuel cell) reaction in a fuel cell is:

H₂O → ½ O₂ + H₂

The generated oxygen (O₂) can be stored on board for various needs (e.g., for emergency use, or enhanced cabin air flow, etc.).

The generated hydrogen (H₂) can be stored on board for fuel (and added to the existing H₂ fuel 26 storage) for the fuel cell 40 when it is run in its electric power generation fuel cell 40 mode (e.g., generating electricity by using H₂ fuel and air).

It is noted that some typical fuel cells are optimized to function properly predominantly in only one mode, e.g., either in electric power generation mode or in regenerative mode. Therefore, the efficiency of such fuel cells when operating in the mode for which it has not been optimized tends to be low.

However, it is noted that a unitized regenerative fuel cell 40 (URFC) can be specially built to function both in the electric power generation mode and in the regenerative mode using the same fuel cell 40. This configuration offers volume/weight savings with minimum required components. Hence, an URFC 40 configuration may be utilized by the systems 10, assemblies and methods of the present disclosure.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the systems and methods of the present disclosure have been described with reference to example embodiments thereof, the present disclosure is not limited to such example embodiments and/or implementations. Rather, the systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A hydrogen energy conversion system (10) comprising:
an electric motor (22) coupled to an air compressor (14) and a compressor turbine (18) via a drive shaft (19);
a power turbine (20) coupled to an electric generator (12); and
a combustor (16);
wherein liquefied compressed hydrogen is configured to flow through at least one of: (i) a casing of the electric motor, (ii) a housing of the electric generator, or (iii) a heat exchanger, to change the phase of the liquefied compressed hydrogen to gaseous hydrogen fuel, with a first portion of the gaseous hydrogen fuel flowing to the combustor;
wherein the combustor utilizes the first portion of the gaseous hydrogen fuel along with compressed air from the air compressor to generate hot combustion products that are sent to the compressor turbine, with the compressor turbine generating hot exhaust that flows to the power turbine to provide output power to the electric generator; and
wherein a second portion of the gaseous hydrogen fuel flows to an anode side (36) of a fuel cell (40) as fuel for the fuel cell.

2. The system of claim 1, wherein the fuel cell (40) is a unitized regenerative fuel cell.

3. The system of claim 1 or 2, wherein the power turbine (20) is a variable-speed single-shaft power turbine that is connected rigidly via a shaft (23) to the electric generator (12); and/or
wherein the power turbine extracts power from expanded exhaust gases downstream of the compressor turbine (18).

4. The system of any preceding claim, wherein the electric motor (22) is an inverter-fed electric motor and a portion of main electric generator power is absorbed by a power converter (24); optionally wherein the power converter is an AC-AC solid state power converter that controls the electric motor speed.

5. The system of any preceding claim, wherein by assisting the air compressor (14) with the electric motor (22), the system is able to increase the power output of the compressor turbine (18), which in turn increases the power output of the power turbine (20), resulting in increased output power provided to the electric generator (12).

6. The system of any preceding claim, wherein a portion of electric power generated by the electric generator (12) is stored in at least one battery (25); and/or
wherein the output of the electric generator (12) is configured to power distributed electric propulsion thrusters of an aircraft.

7. The system of any preceding claim, wherein the liquefied compressed hydrogen is stored on-board an aircraft in at least one tank (28).

8. The system of any preceding claim, wherein compressed air bled off the air compressor flows to a cathode side (38) of the fuel cell as an oxidizer of the fuel cell; optionally wherein a pressure regulator valve (42) controls the air bleed flow to the cathode side of the fuel cell.

9. The system of any preceding claim, wherein electric power generated from the fuel cell (40) is used by electric loads on-board an aircraft or stored in dedicated fuel cell batteries.

10. The system of claim 8, wherein the compressed air bled off the air compressor (14) is heated in a heat exchanger (32), with the compressed air absorbing heat from hot exhaust off the power turbine (20); and/or
wherein discharge effluent liquid water from the cathode side (38) is delivered at an inlet of the air compressor to cool inlet air to the air compressor.

11. The system of any preceding claim, wherein waste heat from the fuel cell (40) is used for de-icing or anti-icing of an aircraft.

12. The system of any preceding claim, wherein electric power from the fuel cell (40) is configured to be fed to the electric motor (22) to provide additional rotational torque to the air compressor to assist with an in-flight re-start of a failed gas turbine engine.

13. A hydrogen energy conversion method comprising:
coupling an electric motor (22) to an air compressor (14) and a compressor turbine (18) via a drive shaft (19);
coupling a power turbine (20) to an electric generator (12);
flowing liquefied compressed hydrogen through at least one of (i) a casing of the electric motor, (ii) a housing of the electric generator, or (iii) a heat exchanger, to change the phase of the liquefied compressed hydrogen to gaseous hydrogen fuel;
flowing a first portion of the gaseous hydrogen fuel to a combustor;
wherein the combustor utilizes the first portion of the gaseous hydrogen fuel along with compressed air to generate hot combustion products that are sent to the compressor turbine, with the compressor turbine generating hot exhaust that flows to the power turbine to provide output power to the electric generator; and
flowing a second portion of the gaseous hydrogen fuel to an anode side (36) of a fuel cell as fuel for the fuel cell.

14. The method of claim 13, wherein compressed air bled off the air compressor (14) flows to a cathode side (38) of the fuel cell as an oxidizer of the fuel cell (40); and
wherein electric power generated from the fuel cell (40) is used by electric loads on-board an aircraft or stored in dedicated fuel cell batteries.

15. The method of claim 13 or 14, wherein electric power from the fuel cell (40) is configured to be fed to the electric motor (22) to provide additional rotational torque to the air compressor to assist with an in-flight re-start of a failed gas turbine engine.
